# EUROPÄISCHE PATENTSCHRIFT

(11) **EP 3 973 195 B1**
(45) Veröffentlichungstag und Bekanntmachung des Hinweises auf die Patenterteilung: **20.03.2024**
(21) Anmeldenummer: 20726287.4
(22) Anmeldetag: 12.05.2020
(51) Int. Cl.: F16B 2/14, A47B 57/56, F16B 9/00

(54) **AN EINEM STEHER BEFESTIGBARE HALTERUNG**
RETAINER WHICH CAN BE FASTENED TO A STAND
SUPPORT POUVANT ÊTRE FIXÉ À UN MONTANT

(30) Priorität: 23.05.2019 AT 504752019
(43) Veröffentlichungstag der Anmeldung: 30.03.2022
(73) Patentinhaber: Neuhofer, Franz, 4893 Zell am Moos (AT)
(72) Erfinder: Neuhofer, Franz, 4893 Zell am Moos (AT)
(74) Vertreter: Hübscher & Partner Patentanwälte GmbH
(86) Internationale Anmeldenummer: PCT/AT2020/060196
(87) Internationale Veröffentlichungsnummer: WO 2020/232493

(56) Entgegenhaltungen:
- GB-A- 772 272
- US-A- 1 535 162
- US-A1- 2015 289 644

## Beschreibung

### Technisches Gebiet

Die Erfindung bezieht sich auf eine an einem Steher befestigbare Halterung mit zwei den Steher schellenartig umschließenden Backen, die gegeneinander senkrecht zu ihrer Stoßfläche verschiebbar geführt sind und an den die Stoßflächen bildenden Enden einander paarweise gegenüberliegende Verbindungsansätze aufweisen.

### Stand der Technik

Um insbesondere an Stehern von hölzernen Stellagen verschiedene Zubehörteile befestigen zu können, ist es bekannt, an diesen Stehern Halterungen schellenartig anzuklemmen, was den Vorteil mit sich bringt, dass einerseits die Steher nicht angebohrt werden müssen und anderseits eine stufenlose Verlagerung der Halterungen entlang der Steher ermöglicht wird. Bekannte Halterungen weisen zu diesem Zweck zwei die üblicherweise im Querschnitt rechtwinkeligen Steher von gegenüberliegenden Seiten umfassende, U-förmige Backen auf, die an ihren Stoßflächen nach außen abgewinkelte Verbindungsansätze in Form von Flanschen bilden, über die die beiden Backen einer Halterung mithilfe von Schrauben verbunden werden, sodass sich die beiden Backen unter einer Vorspannung an den zu den Flanschen parallelen Flächen der Steher anlegen. Nachteilig ist, dass die von den Backen abstehenden Flansche in störender Weise Platz benötigen und dass die Backen der Halterung nicht werkzeuglos an den Stehern angeklemmt werden können.

Um Gegenstände an ein Steherprofil anklemmen zu können, ist es außerdem bekannt (GB 2 078 098 A), zwei Klemmbacken vorzusehen, die zwei einander zugekehrte oder voneinander abgekehrte Längsrandstege des Steherprofils umgreifen und an einander zugekehrten oder voneinander abgekehrten Falzstegen zueinander geneigt verlaufende Keilflächen bilden, die mit einem auf die Falzstege aufsteckbaren Klemmschuh zusammenwirken, sodass die Klemmbacken je nach dem Neigungsverlauf der Keilflächen entweder auseinandergedrückt oder zueinander gezogen werden, und zwar mit dem Ergebnis, dass die Klemmbacken zwischen den Längsrandstegen klemmend gehalten werden. Abgesehen davon, dass diese bekannten Klemmbacken Steherprofile mit zwei einander zugekehrten oder voneinander abgekehrten Längsrandstegen voraussetzen, ergibt sich die Schwierigkeit, dass die gegenseitige Lage der beiden Klemmbacken entlang der Längsrandstege konstruktiv nicht vorgegeben ist, was dazu führt, dass der Klemmschuh und damit ein mit dem Klemmschuh verbundener Gegenstand in Abhängigkeit von einer gegenseitigen Versetzung der Klemmbacken in Richtung der Längsrandstege quer zu diesen Längsrandstegen verlagert wird.

Bei anderen einen Steher schellenartig umgreifenden Klemmbacken (DE 43 03 832 A1, US 2013/ 0206938 A1) sind diese Klemmbacken selbst über Keilflächen in Längsrichtung des Stehers gegeneinander verschiebbar geführt, was eine gegenseitige Ausrichtung der beiden Klemmbacken in Längsrichtung des Stehers ausschließt.

### Darstellung der Erfindung

Der Erfindung liegt somit die Aufgabe zugrunde, eine Halterung zur Befestigung von Zubehörteilen an einem Steher so auszugestalten, dass eine einfache, werkzeuglose Montage sichergestellt wird, und zwar bei einem vergleichsweise geringen Platzbedarf, ohne eine gegenseitige Versetzung der Klemmbacken befürchten zu müssen.

Ausgehend von einer Halterung der eingangs geschilderten Art löst die Erfindung die gestellte Aufgabe dadurch, dass die Verbindungsansätze auf ihren von der Stoßfläche abgekehrten Seite zueinander geneigt verlaufende Keilflächen bilden und mit je einem die keilförmigen Verbindungsansätze in einer keilförmigen Steckaufnahme umfassenden Klemmschuh zusammenwirken und dass die beiden Backen auf ihrer Innenseite je einen über die Stoßfläche gegen den anderen Backen vorstehenden und in eine Führungsnut des anderen Backens eingreifenden Führungssteg aufweisen.

Aufgrund dieser Konstruktionsvoraussetzungen brauchen die Klemmschuhe nach einem Zusammenführen der beiden Backen um den Steher lediglich auf die keilförmigen Verbindungsansätze der beiden Backen aufgeschoben zu werden, um die beiden Backen über die keilförmige Steckaufnahme der Klemmschuhe gegeneinander zu ziehen und klemmend am Steher festzulegen. Die Klemmschuhe können dabei eine geringe Bautiefe aufweisen, weil es nur erforderlich ist, die keilförmigen Verbindungsansätze der Backen in der keilförmigen Steckaufnahme der Klemmschuhe unterzubringen.

Um die beiden Backen in ihrer den Steher umschließenden Lage gegeneinander in Längsrichtung des Stehers festzulegen, sind die beiden Backen gegeneinander quer zur Steherlängsrichtung verschiebbar geführt, und zwar mithilfe von über die Stoßfläche gegen den anderen Backen vorstehenden und in eine Führungsnut des anderen Backens eingreifenden Führungsstegen, sodass die beiden Backen beim Zusammenführen selbstständig gegeneinander ausgerichtet und auch beim Aufschieben der Klemmschuhe in dieser Ausrichtlage festgehalten werden.

Besonders einfache Handhabungsbedingungen ergeben sich, wenn die keilförmigen Steckaufnahmen der Klemmschuhe eine hinterschnittene Führungsnut bilden, in die die keilförmigen Verbindungsansätze formschlüssig eingreifen, weil in diesem Fall ein Lösen der Klemmschuhe quer zum Steher durch den Formschluss zwischen den Verbindungsansätzen der Backen und der hinterschnittenen Führungsnut der Klemmschuhe unterbunden wird.

Weisen die Klemmschuhe eine mit einer Rastverzahnung der keilförmigen Verbindungsansätze zusammenwirkende, federnde Rastzunge auf, so kann die jeweilige Stellung der Klemmschuhe gegenüber den keilförmigen Verbindungsansätzen der Backen mittels der Rastverzahnung gesichert werden. Die in die Rastverzahnung eingreifende federnde Rastzunge verhindert ja das Abziehen der Klemmschuhe von den keilförmigen Verbindungsansätzen der Backen entgegen der Aufsteckrichtung der Klemmschuhe.

Da die häufig gegenüber mechanischen Beanspruchungen empfindliche Oberfläche der üblicherweise hölzernen Steher keiner Verletzungsgefahr durch die Halterung ausgesetzt werden soll, können die beiden Backen auf ihrer dem Steher zugewandten Innenseite mit einem Reibbelag versehen sein. Durch entsprechende Reibbeläge wird der Kraftschluss zwischen dem Steher und den Backen deutlich verbessert und zugleich eine Schonung der Steheroberfläche erreicht.

Zubehörteile können an den Backen abgestützt oder befestigt sein. Für manche Zubehörteile ergeben sich jedoch besonders einfache Befestigungsbedingungen, wenn zumindest einer der beiden Klemmschuhe Teil eines am Steher zu befestigenden Konstruktionselements ist. Die Lastabtragung über zumindest einen Klemmschuh bringt außerdem den Vorteil mit sich, dass die Gewichtsbelastung des Klemmschuhs zur Sicherung beziehungsweise Verstärkung der Klemmkräfte zwischen den Backen und dem Steher genützt werden kann, wenn diese Gewichtsbelastung in Aufsteckrichtung des Klemmschuhs auf die keilförmigen Verbindungsansätze der Steher wirkt.

### Kurze Beschreibung der Erfindung

In der Zeichnung ist der Erfindungsgegenstand beispielsweise dargestellt. Es zeigen
- Fig. 1: eine erfindungsgemäße Halterung in einer Seitenansicht,
- Fig. 2: diese Halterung im Schnitt nach der Linie II-II der Fig. 1,
- Fig. 3: die beiden zusammengeschobenen Backen der Halterung in einer Seitenansicht ohne Klemmschuhe und
- Fig. 4: einen Klemmschuh in einer zum Teil aufgerissenen Ansicht auf die Innenseite.

### Wege zur Ausführung der Erfindung

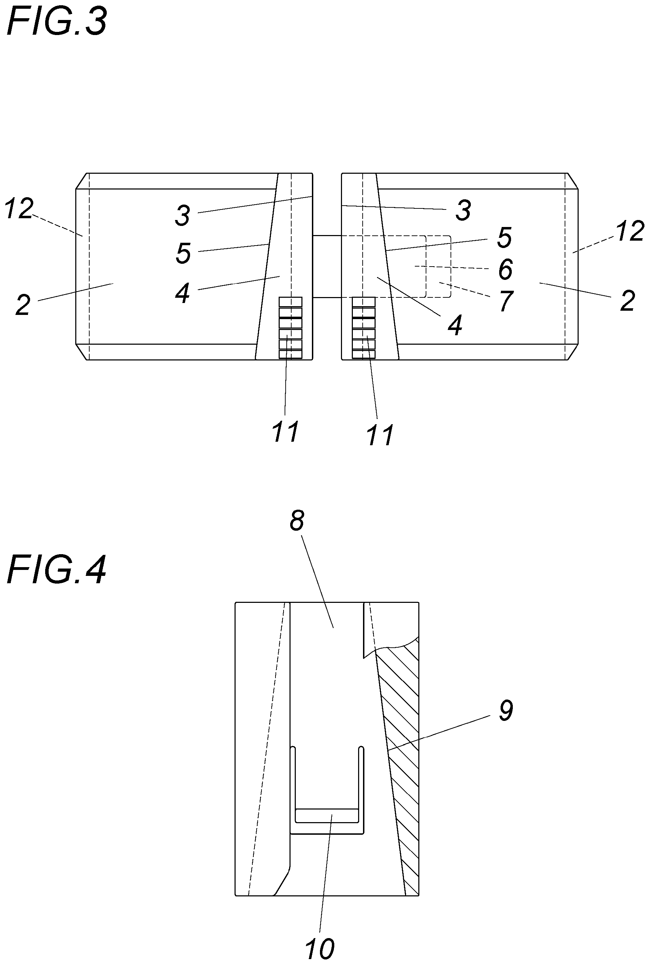

Die Halterung nach der Erfindung weist zwei einen quaderförmigen, vorzugsweise hölzernen Steher 1 umschließende, U-förmige Backen 2 auf, die an ihren einander gegenüberliegenden, Stoßflächen 3 bildenden Enden mit Verbindungsansätzen 4 versehen sind. Diese einander paarweise gegenüberliegenden Verbindungsansätze 4 formen auf ihrer von den Stoßflächen 3 abgekehrten Seite Keilflächen 5, die zueinander geneigt verlaufen, wie dies insbesondere der Fig. 3 entnommen werden kann.

Zur gegenseitigen Führung der senkrecht zu den Stoßflächen 3 verschiebbaren Backen 2 ist jede der beiden Backen 2 auf ihrer Innenseite mit einem über die Stoßfläche 3 gegen den anderen Backen 2 vorstehenden Führungssteg 6 versehen, der in eine gegenüber dem Steher 1 offene Führungsnut 7 des jeweils anderen Backens 2 eingreift.

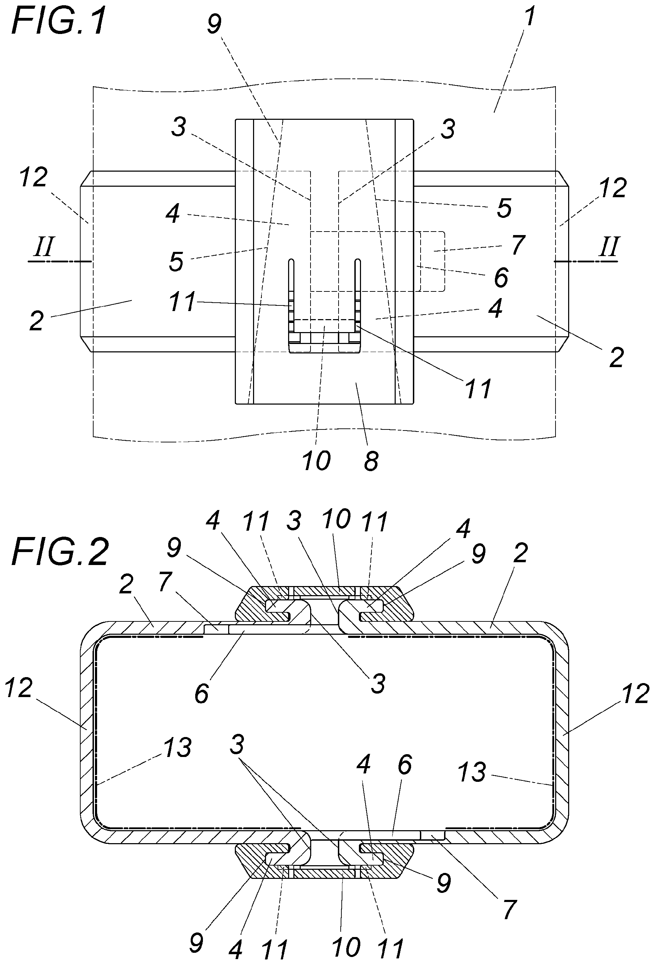

Zum Verbinden der beiden Backen 2 dienen Klemmschuhe 8, die mit einer keilförmigen Steckaufnahme 9 versehen sind. Diese Steckaufnahme 9 ist in Form einer hinterschnittenen Führungsnut ausgebildet, die die keilförmigen Verbindungsansätze 4 der Backen 2 formschlüssig aufnimmt, wie dies insbesondere aus der Fig. 2 hervorgeht.

Damit die jeweilige Klemmlage der Klemmschuhe 8 auf den keilförmigen Verbindungsansätzen 4 in einfacher Art gesichert werden kann, formen die Klemmschuhe 8 eine federnde Rastzunge 10, die mit Rastverzahnungen 11 der Verbindungsansätze 4 zusammenwirken.

Um die Halterung an einem Steher 1 anzuklemmen werden die beiden Backen 2 von einander gegenüberliegenden Seiten um den Steher 1 so zusammengefügt, dass die Führungsstege 6 in die Führungsnuten 7 eingreifen. Zum Festklemmen der Backen 2 am Steher 1 werden dann die Klemmschuhe 8 auf die keilförmigen Verbindungsansätze 4 aufgesteckt, sodass deren Keilflächen 5 mit der keilförmigen Steckaufnahme 9 der Klemmschuhe 8 in Wirkverbindung treten und die Backen 2 gegeneinander gezogen werden, bis die Backenstege 12, die die Schenkel der U-förmigen Backen 2 verbinden, unter einer entsprechenden Vorspannung an den einander gegenüberliegenden Seiten der Steher 1 klemmend anliegen. Die Klemmstellung der Klemmschuhe 8 wird durch die Verrastung der Klemmschuhe 8 gegenüber den Verbindungsansätze 4 mithilfe der in die Rastverzahnungen 11 eingreifenden Rastzungen 10 gesichert und kann nur gelöst werden, wenn die Rastzunge 12 aus den Rastverzahnungen 11 gelöst wird.

Um die kraftschlüssige Verbindung zwischen den Backen 2 und dem Steher 1 zu verbessern, können zumindest die Backenstege 12 auf ihrer Innenseite mit einem Reibbelag 13 versehen sein.

## Patentansprüche

1. An einem Steher (1) befestigbare Halterung mit zwei den Steher (1) schellenartig umschließenden Backen (2), die gegeneinander senkrecht zu ihrer Stoßfläche (3) verschiebbar geführt sind und an den die Stoßflächen (3) bildenden Enden einander paarweise gegenüberliegende Verbindungsansätze (4) aufweisen, wobei die Verbindungsansätze (4) auf ihren von der Stoßfläche (3) abgekehrten Seite zueinander geneigt verlaufende Keilflächen (5) bilden und mit je einem die keilförmigen Verbindungsansätze (4) in einer keilförmigen Steckaufnahme (9) umfassenden Klemmschuh (8) zusammmenwirken, **dadurch gekennzeichnet, dass** die beiden Backen (2) auf ihrer Innenseite je einen über die Stoßfläche (3) gegen den anderen Backen (2) vorstehenden und in eine Führungsnut (7) des anderen Backens (2) eingreifenden Führungssteg (6) aufweisen.

2. Halterung nach Anspruch 1, **dadurch gekennzeichnet, dass** die keilförmigen Steckaufnahmen (9) der Klemmschuhe (8) eine hinterschnittene Führungsnut bilden, in die die keilförmigen Verbindungsansätze (4) formschlüssig eingreifen.

3. Halterung nach Anspruch 1 oder 2, **dadurch gekennzeichnet, dass** die Klemmschuhe (8) eine mit einer Rastverzahnung (11) der keilfömigen Verbindungsansätze (4) zusammenwirkende, federnde Rastzunge (10) aufweisen.

4. Halterung nach einem der Ansprüche 1 bis 3, **dadurch gekennzeichnet, dass** die beiden Backen (2) auf ihrer dem Steher (1) zugewandten Innenseite mit einem Reibbelag (13) versehen sind.

5. Halterung nach einem der Ansprüche 1 bis 4, **dadurch gekennzeichnet, dass** zumindest einer der beiden Klemmschuhe (8) Teil eines am Steher (1) zu befestigenden Konstruktionselements ist.

## Claims

1. Holder which can be fastened to an upright (1) and has two jaws (2) which enclose the upright (1) in the manner of clamps, are guided so as to be displaceable relative to one another perpendicular to their abutment surface (3) and have connecting lugs (4) which are located opposite one another in pairs at the jaw ends forming the abutment surfaces (3), whereby the connecting lugs (4) form wedge-shaped surfaces (5) inclined towards one another on their side facing away from the abutment surface (3) and work together with a respective clamping shoe (8) surrounding the wedge-shaped connecting lugs(4) in a wedge-shaped plug-in receptacle (9), **characterized in that** the two jaws (2) each have on their inner side a respective guide web (6) projecting beyond the abutment surface (3) towards the other jaw (2) and engaging in a guide groove (7) of the other jaw (2).

2. Holder according to claim 1, **characterized in that** the wedge-shaped plug-in receptacles (9) of the clamping shoes (8) form an undercut guide groove in which the wedge-shaped connecting lugs (4) engage in a form-fitting manner.

3. Holder according to claim 1 or 2, **characterized in that** the clamping shoes (8) have an elastic latching tongue (10) working together with a latching toothing (11) of the wedge-shaped connecting lugs (4).

4. Holder according to one of claims 1 to 3, **characterized in that** the two jaws (2) are provided with a friction lining (13) on their inner side facing the upright (1).

5. Holder according to one of claims 1 to 4, **characterized in that** at least one of the two clamping shoes (8) is part of a constructional element to be fastened to the upright (1).

## Revendications

1. Support pouvant être fixé à un montant (1) et comprenant deux mâchoires (2) qui entourent le montant (1) à la manière d'un collier, qui sont guidées de façon déplaçable l'une par rapport à l'autre perpendiculairement à leurs surfaces de butée (3), et qui présentent, aux extrémités formant les surfaces de butée (3), des pièces de connexion (4) mutuellement opposées par paires, dans lequel les pièces de connexion (4), au niveau de leur côté opposé à la surface de butée (3), forment des surfaces de coin (5) qui s'étendent de façon inclinée l'une par rapport à l'autre et qui coopèrent chacune avec un patin de serrage (8) qui enferme les pièces de liaison en forme de coin (4) à l'intérieur d'un logement d'enfichage en forme de coin (9), caractérisé que les deux mâchoires (2) présentent chacune sur leur face intérieure une nervure de guidage (6) qui fait saillie au-delà de la surface de butée (3) en direction de l'autre mâchoire (2) et qui s'engage à l'intérieur d'une rainure de guidage (7) de l'autre mâchoire (2).

2. Support selon la revendication 1, **caractérisé en ce que** les logements d'enfichage en forme de coin (9) des patins de serrage (8) forment une rainure de guidage en contre-dépouille à l'intérieur de laquelle les pièces de liaison en forme de coin (4) s'engagent par complémentarité de forme.

3. Support selon la revendication 1 ou 2, **caractérisé en ce que** les patins de serrage (8) présentent une languette d'encliquetage élastique (10) qui coopère avec une denture d'encliquetage (11) des pièces de liaison en forme de coin (4).

4. Support selon l'une quelconque des revendications 1 à 3, **caractérisé en ce que** les deux mâchoires (2) sont pourvues d'une garniture de friction (13) sur leur face intérieure orientée en direction du montant (1).

5. Support selon l'une quelconque des revendications 1 à 4, **caractérisé en ce qu'**au moins l'un des deux patins de serrage (8) fait partie d'un élément de construction à fixer sur le montant (1).
